# EUROPEAN PATENT APPLICATION

(11) **EP 4 618 630 A1**
(43) Date of publication of application: **17.09.2025**
(21) Application number: 22964872.0
(22) Date of filing: 11.11.2022
(51) Int. Cl.: H04W 52/02

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/131483
(87) International publication number: WO 2024/098404

(57) **Abstract**

A wireless communication method and a device are provided, and the method includes: transmitting, by a first device, a first target signal and a second target signal, where the first target signal is used to carry information to be transmitted, the second target signal is a signal received based on an envelope detection scheme or an amplitude-modulated signal, and a time-frequency resource of the first target signal overlaps with a time-frequency resource of the second target signal.

## Description

### TECHNICAL FIELD

Embodiments of the present application relate to the field of communications, and in particular, to a wireless communication method and a device.

### BACKGROUND

In some scenarios, for a signal through a low-order modulation scheme (e.g., amplitude keying modulation (Amplitude Shift Keying, ASK)) or a signal received based on an envelope detection scheme, for example, a wake up signal (WUS), may be received by a low-power consumption and low complexity receiver (e.g., wake up receiver (Wake Up Receiver, WUR)), to reduce power consumption, complexity and cost of a terminal.

Traditional signals in the communication system are usually obtained by using a high-order modulation scheme (e.g., orthogonal frequency-division multiplexing (OFDM) modulation), and when the above two types of signals exist in the communication system, how to transmit the signals to improve the resource utilization ratio of the system is an urgent problem to be solved.

### SUMMARY

The present application provides a wireless communication method and a device, which are beneficial to improving the resource utilization ratio of the system.

In a first aspect, a wireless communication method is provided, and includes: transmitting, by a first device, a first target signal and a second target signal, where the first target signal is used to carry information to be transmitted, the second target signal is a signal received based on an envelope detection scheme or an amplitude-modulated signal, and a time-frequency resource of the first target signal overlaps with a time-frequency resource of the second target signal.

In a second aspect, a wireless communication method is provided, and includes: receiving, by a second device, a first target signal transmitted by a first device, where the first target signal is used to carry information to be transmitted, a time-frequency resource of the first target signal overlaps with a time-frequency resource of a second target signal transmitted by the first device, and the second target signal is a signal received based on an envelope detection scheme or an amplitude-modulated signal.

In a third aspect, a communication device is provided, and configured to perform the method in the above first aspect or its various implementations.

Specifically, the communication device includes a functional module configured to perform the method in the above first aspect or its various implementations.

In a fourth aspect, a communication device is provided, and configured to perform the method in the above second aspect or its various implementations.

Specifically, the communication device includes a functional module configured to perform the method in the above second aspect or its various implementations.

In a fifth aspect, a communication device is provided, and includes a processor and a memory. The memory is configured to store a computer program, and the processor is used to call and run the computer program stored in the memory, to perform the method in the above first aspect or its various implementations.

In a sixth aspect, a communication device is provided, and includes a processor and a memory. The memory is configured to store a computer program, and the processor is used to call and run the computer program stored in the memory, to perform the method in the above second aspect or its various implementations.

In a seventh aspect, a chip is provided, and configured to implement the method in any one of the above first aspect to second aspect or various implementations thereof.

Specifically, the chip includes a processor, configured to call a computer program from a memory and run the computer program, to cause a device equipped with the apparatus to perform the method in any one of the above first aspect to second aspect or various implementations thereof.

In an eighth aspect, a computer readable storage medium is provided, and configured to store a computer program. The computer program causes a computer to perform the method in any one of the above first aspect to second aspect or various implementations thereof.

In a ninth aspect, a computer program product is provided, and includes computer program instructions. The computer program instructions cause a computer to perform the method in any one of the above first aspect to second aspect or various implementations thereof.

In a tenth aspect, a computer program is provided, and the computer program, when executed on a computer, causes a computer to perform the method in any one of the above first aspect to second aspect or various implementations thereof.

Through the above technical solutions, when the first device needs to transmit a first target signal for carrying information to be transmitted, and a second target signal which is received based on an envelope detection scheme or is amplitude-modulated, the first device may perform multiplexing on time-frequency resources of the first target signal and the second target signal, that is, the time-frequency resource of the first target signal may overlap with the time-frequency resource of the second target signal, thereby improving the resource utilization ratio of the system.

### BRIEF DESCRIPTION OF THE DRAWINGS

FIG. 1 is a schematic diagram of a communication system architecture provided in the embodiments of the present application.
FIG. 2 is a schematic diagram of a zero-power consumption communication system according to an example of the present application.
FIG. 3 is a schematic diagram of power harvesting according to an embodiment of the present application.
FIG. 4 is a schematic diagram of back scattering communication according to an embodiment of the present application.
FIG. 5 is a circuit schematic diagram of resistive load modulation according to an embodiment of the present application
FIG. 6 is a working schematic diagram of a wake up receiver.
FIG. 7 is a schematic diagram of information composition of a WUR PDDU frame.
FIG. 8 is a schematic diagram of OOK modulation.
FIG. 9 is a schematic diagram of an MC-OOK signal generated by a multi-carrier.
FIG. 10 is a schematic diagram of transmitting a WUS and a data signal by a multi-carrier.
FIG. 11 is a constellation point distribution diagram of 256QAM modulation.
FIG. 12 is a schematic diagram of a wireless communication method provided according to the embodiments of the present application.
FIG. 13 is a schematic diagram of modulation depths of an on signal and an off signal according to the embodiments of the present application.
FIG. 14 is a schematic diagram of a second target signal according to the embodiments of the present application.
FIG. 15 is a diagram of constellation point distribution in QPSK modulation.
FIG. 16 is a schematic diagram of a mapping scheme on a time domain symbol occupied by a first signal.
FIG. 17 is a schematic diagram of a mapping scheme on a time domain symbol occupied by a second signal.
FIG. 18 is an example of a time-frequency resource for transmitting a WUS according to the embodiments of the present application.
FIG. 19 is a schematic diagram of transmitting a data signal by a time-frequency resource for transmitting an off signal of a WUS.
FIG. 20 is a schematic diagram of transmitting a WUS and a data signal according to the embodiments of the present application.
FIG. 21 is another schematic diagram of transmitting a WUS and a data signal according to the embodiments of the present application.
FIG. 22 is yet another schematic diagram of transmitting a WUS and a data signal according to the embodiments of the present application.
FIG. 23 is a schematic block diagram of a communication device provided according to the embodiments of the present application.
FIG. 24 is a schematic block diagram of a communication device provided according to the embodiments of the present application.
FIG. 25 is a schematic block diagram of a communication device provided according to the embodiments of the present application.
FIG. 26 is a schematic block diagram of a chip provided according to the embodiments of the present application.
FIG. 27 is a schematic block diagram of a communication system provided according to the embodiments of the present application.

### DETAILED DESCRIPTION

Technical solutions in the embodiments of the present application will be described below in conjunction with drawings of the embodiments of the present application. Obviously, the described embodiments are some but not all of the embodiments of the present application. All other embodiments obtained by those ordinary skilled in the art based on the embodiments of the present application without creative efforts shall fall within the protection scope of the present application.

The technical solutions in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), wireless fidelity (WiFi or WIFI), a 5th-generation (5G) communication system, a cellular internet of things system, a cellular passive internet of things system or other communication systems, etc.

Generally speaking, traditional communication systems support a limited number of connections, which is also easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present application may be applied to these communication systems as well.

Optionally, the communication system in the embodiments of the present application may be applied to a carrier aggregation (CA) scenario, a dual connectivity (DC) scenario, and may also be applied to a standalone (SA) network deployment scenario.

Optionally, the communication system in the embodiments of the present application may be applied to an unlicensed spectrum, where the unlicensed spectrum may also be considered as a shared spectrum. Alternatively, the communication system in the embodiments of the present application may be applied to a licensed spectrum, where the licensed spectrum may be considered as an unshared spectrum.

In the embodiments of the present application, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

In the embodiments of the present application, the network device may be a device used to communicate with the mobile device. The network device may be an access point (Access Point, AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, a vehicle-mounted device, a wearable device, a network device (gNB) in the NR network, or a network device in the cellular internet of things, or a network device in the cellular passive internet of things, or a network device in the PLMN network evolved in the future or a network device in the NTN network, etc.

As an example but not a limitation, in the embodiments of the present application, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present application, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

The terminal device may be a station (STATION, ST) in the WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (Public Land Mobile Network, PLMN) network, a terminal device in the cellular internet of things, a terminal device in the cellular passive internet of things, or the like.

In the embodiments of the present application, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present application, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device not only is a hardware device, but also implements powerful functions by software support as well as data interaction or cloud interaction. Generalized wearable smart devices include devices, that are fully functional, large in size and may implement full or partial functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

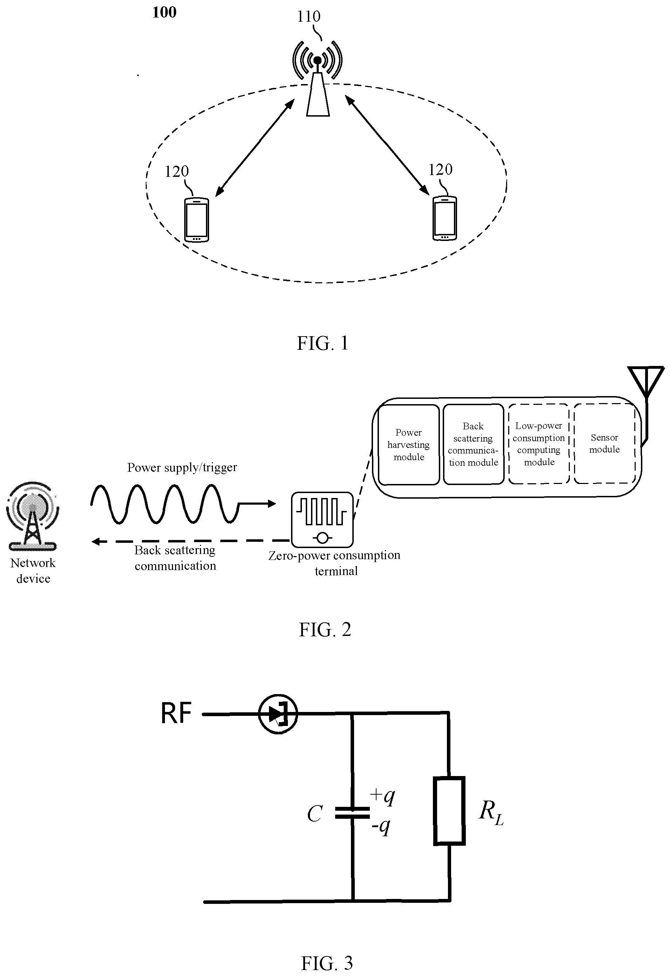

Exemplarily, a communication system 100 applied by the embodiments of the present application is shown in FIG. 1. The communication system 100 may include a network device 110, and the network device 110 may be a device that communicates with terminal devices 120 (or referred to as communication terminals or terminals). The network device 110 may provide communication coverage for a specific geographical area and may communicate with terminal devices located within the coverage area.

FIG. 1 exemplarily shows one network device and two terminal devices. Optionally, the communication system 100 may include a plurality of network devices, and there may be another number of terminal devices within the coverage range of each network device, which are not limited in the embodiments of the present application.

Optionally, the communication system 100 may further include other network entities such as a network controller, a mobility management entity, or the like, which are not limited in the embodiments of the present application.

It should be understood that, in the embodiments of the present application, a device with a communication function in the network/system may be referred to as a communication device. Taking the communication system 100 shown in FIG. 1 as an example, the communication device may include a network device 110 with a communication function and a terminal device 120 with a communication function. The network device 110 and the terminal device 120 may be the specific devices described above, which will not be repeated here. The communication device may further include other devices in the communication system 100, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

It should be understood that, "indicate / indicated / indicating / indication" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

In the embodiments of the present application, the "predefined" may be implemented by pre-saving corresponding codes, tables or other manners that may be used to indicate related information, in the device (for example, including the terminal device and the network device), and the present application does not limit its specific implementation. For example, the predefined may refer to what is defined in a protocol.

In the embodiments of the present application, the "protocol" may refer to standard protocols in the communication field, for example, may include an LTE protocol, an NR protocol, and related protocols applied in future communication systems, which are not limited to the present application.

To facilitate the understanding of the technical solutions in the embodiments of the present application, the relevant technologies of the present application are explained.

### I. Zero-power consumption communication

Key technologies of the zero-power consumption communication include power harvesting, back scattering communication and a low-power consumption technology.

As shown in FIG. 2, a typical zero-power consumption communication system (e.g., a Radio Frequency Identification (RFID) system) includes a network device (e.g., a reader/writer of the RFID system) and a zero-power consumption device (e.g., an electronic tag). The network device is used to transmit a wireless power supply signal, a downlink communication signal to the zero-power consumption device, and receive a back scattering signal from the zero-power consumption device. A basic zero-power consumption device includes a power harvesting module, a back scattering communication module and a low-power consumption computing module. In addition, the zero-power consumption device may further have a memory or a sensor, for storing some basic information (such as an object identification) or sensor data such as ambient temperature and ambient humidity, etc.

For example, the power harvesting module may harvest power carried in radio waves in space (radio waves emitted by the network device as shown in FIG. 2), to drive the low-power consumption computing module of the zero-power consumption device and implement back scattering communication. After obtaining power, the zero-power consumption device may receive a control command from the network device, and transmit data to the network device based on the back scattering scheme, based on the control signaling. The transmitted data may be data stored in the zero-power consumption device itself (such as an identity identification or pre-written information, such as production date, brand and manufacturer of the product, etc.). The zero-power consumption device may also be loaded with various types of sensors, thereby reporting data harvested by the various types of sensors, based on a zero-power consumption mechanism.

The key technologies in the zero-power consumption communication are described below.

### 1. Radio frequency power harvesting (RF Power Harvesting)

As shown in FIG. 3, a radio frequency power harvesting module implements the harvesting of spacial electromagnetic wave power based on an electromagnetic induction principle, and then obtains power required for driving the zero-power consumption device to work, such as driving a low-power consumption demodulation and modulation module, sensors, and memory reading, etc. Therefore, the zero-power consumption device does not need a traditional battery.

### 2. Back scattering communication

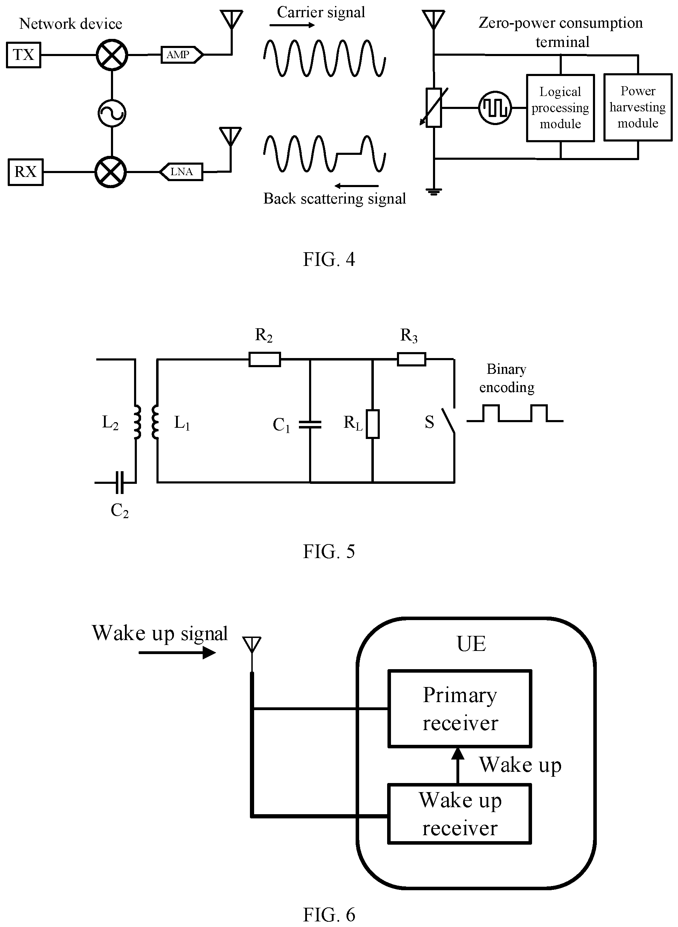

As shown in FIG. 4, the zero-power consumption device receives a carrier signal transmitted by the network device and modulates the carrier signal, loads information to be transmitted and radiates the modulated signal from an antenna (antennas). This information transmission process is called back scattering communication. Back scattering and load modulation functions are inseparable. The load modulation changes the magnitude of an impedance and other parameters of the zero-power consumption device, by adjusting and controlling an electrical parameter of an oscillation circuit of the zero-power consumption device according to the rhythm of a data stream, thereby completing the modulation process. The load modulation technology mainly includes two schemes: resistive load modulation and capacitive load modulation. In the resistive load modulation, a resistor is connected in parallel with the load, and the resistor is turned on or off based on the control of a binary data stream, as shown in FIG. 5. The on and off of the resistor will cause the change of the circuit voltage, thereby implementing amplitude keying modulation (ASK). That is, the modulation and transmission of the signal are implemented by adjusting the magnitude of the amplitude of the back scattering signal of the zero-power consumption device. Similarly, in the capacitive load modulation, the change of the resonant frequency of the circuit may be implemented by the on and off of the capacitor, thereby implementing frequency keying modulation (Frequency Shift Keying, FSK). That is, the modulation and transmission of the signal are implemented by adjusting the working frequency of the back scattering signal of the zero-power consumption device.

It may be seen that the zero-power consumption device performs information modulation on an incoming wave signal by means of the load modulation scheme, thereby implementing the back scattering communication process. Therefore, the zero-power consumption device has significant advantages.
(1) It does not actively transmit a signal, so it does not need a complex radio frequency link, such as a PA, a radio frequency filter, etc.
(2) It does not need to actively generate a high-frequency signal, so it does not need a high-frequency crystal oscillator.
(3) By means of the back scattering communication, the terminal's signal transmission does not need to consume the terminal's own power.

### 3. Encoding technology

For the data transmitted by the zero-power consumption device, different forms of codes may be used to represent binary "1" and "0". The wireless radio frequency identification system usually uses one of the following encoding methods: reverse non-return to zero (NRZ) encoding, Manchester encoding, unipolar return to zero encoding, differential bi-phase (DBP) encoding, differential encoding, pulse interval encoding (PIE), bi-phase space encoding (FM0), Miller encoding, differential encoding, etc. In simple terms, different encoding technologies use different pulse signals to represent 0 and 1.

In some scenarios, based on power sources and usage schemes of zero-power consumption devices, the zero-power consumption devices may be divided into the following types.

### 1. Passive zero-power consumption device

The zero-power consumption device (such as the electronic tag in the RFID system) does not need a built-in battery, and when the zero-power consumption device approaches the network device (such as the reader/writer in the RFID system), the zero-power consumption device is located within a near field range formed by antenna radiation of the network device. Therefore, the antenna of the zero-power consumption device generates an induced current through electromagnetic induction, and the induced current drives a low-power consumption chip circuit of the zero-power consumption device. Demodulation of a forward link signal, and modulation of a reverse link (or reflection link) signal and other works are implemented. For the back scattering link, the zero-power consumption device transmits a signal by the back scattering implementation.

It may be seen that the passive zero-power consumption device does not need a built-in battery to drive both the forward link and the reverse link, and is a true zero-power consumption device.

The passive zero-power consumption device does not need the battery, the radio frequency circuit and the baseband circuit are very simple, and they do not need, for example, a low-noise amplifier (LNA), a power amplifier (PA), a crystal oscillator, analog-to-digital converters (Analog-to-Digital Converter, ADC) and other devices. Therefore, the passive zero-power consumption device has many advantages such as small size, light weight, very cheap price, and long service life, etc.

### 2. Semi-passive zero-power consumption device

The semi-passive zero-power consumption device also is not equipped with a conventional battery itself, but may use an RF power harvesting module to harvest radio wave power, and meanwhile, store the harvested power into a power storage unit (such as a capacitor). After obtaining the power, the power storage unit may drive a low-power consumption chip circuit of the zero-power consumption device. Demodulation of the forward link signal, and modulation of the reverse link signal and other works are implemented. For the back scattering link, the zero-power consumption device transmits a signal by the back scattering implementation.

It may be seen that the semi-passive zero-power consumption device does not need a built-in battery to drive both the forward link and the reverse link. Although the power stored in the capacitor is used in the work, the power comes from the radio power harvested by the power harvesting module. Therefore, it is also a true zero-power consumption device.

The semi-passive zero-power consumption device inherits many advantages of the passive zero-power consumption device, so it has many advantages such as small size, light weight, very cheap price and long service life.

### 3. Active zero-power consumption device

The zero-power consumption device used in some scenarios may also be an active zero-power consumption device, and such a device may have a built-in battery. The battery is used to drive a low-power consumption chip circuit of the zero-power consumption device. Demodulation of the forward link signal, and modulation of the reverse link signal and other works are implemented. However, for the back scattering link, the zero-power consumption device transmits a signal by the back scattering implementation. Therefore, the zero-power consumption of such a device is mainly reflected in the fact that the signal transmission of the reverse link does not need the terminal's own power, but uses the back scattering scheme.

### II. Cellular passive internet of things

With the increase in 5G industry applications, types of connected objects and application scenarios are increasing, and there also will be higher requirements on cost and power consumption of communication terminals. Applications of battery-free, low-cost passive internet of things devices become key technologies of the cellular internet of things, which enriches the types and number of 5G network-linked terminals, and truly implements the Internet of Everything. The passive internet of things device may be extended on its basis based on zero-power consumption communication technologies such as the RFID technology, so as to be applicable to the cellular internet of things.

To facilitate the understanding of the embodiments of the present application, a power supply signal, a scheduling signal and a carrier signal related to the zero-power consumption communication are explained.

### 1. Power supply signal

The power supply signal is a power source for power harvesting by the zero-power consumption device.

In terms of carriers of the power supply signal, it may be a base station, a smart phone, a smart gateway, a charging station, a micro base station, or the like.

In terms of frequency bands, a frequency band of a radio wave used for power supply may be low frequency, medium frequency, high frequency, etc.

In terms of waveforms, the radio wave used for power supply may be a sine wave, a square wave, a triangle wave, a pulse, a rectangular wave, etc.

In addition, the power supply signal may be a continuous wave, or a discontinuous wave (i.e., interruption for a certain period of time is allowed).

Optionally, the power supply signal may be an existing signal in the 3rd generation partnership project (3GPP) standard, for example, a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc. Alternatively, it may be a WIFI signal or a blue tooth signal.

Optionally, the power supply signal may also be implemented by a newly added signal, such as a newly added signal dedicated to power supply.

### 2. Trigger signal, or called as scheduling signal

The trigger signal is used to trigger or schedule the zero-power consumption device to transmit data.

In terms of carriers of the trigger signal, it may be a base station, a smart phone, a smart gateway, etc.

In terms of frequency bands, a radio wave used for triggering or scheduling may be low frequency, medium frequency, high frequency, etc.

In terms of waveforms, a radio wave used for triggering or scheduling may be a sine wave, a square wave, a triangle wave, a pulse, a rectangular wave, etc.

In addition, the trigger signal may be a continuous wave, or a discontinuous wave (i.e., interruption for a certain period of time is allowed).

Optionally, the trigger signal may be an existing signal in the 3GPP standard, for example, an SRS, a PUSCH, a PRACH, a PUCCH, a PDCCH, a PDSCH, a PBCH, or a WIFI signal or a blue tooth signal, etc.

Optionally, the trigger signal may also be implemented by a newly added signal, such as a newly added signal dedicated to triggering or scheduling.

### 3. Carrier signal

The carrier signal is used by the zero-power consumption device to generate a back scattering signal. For example, the zero-power consumption device may modulate the received carrier signal according to information to be transmitted, to form the back scattering signal.

In terms of carriers of the carrier signal, it may be a base station, a smart phone, a smart gateway, etc.

In terms of frequency bands, a radio wave used as the carrier signal may be low frequency, medium frequency, high frequency, etc.

In terms of waveforms, the radio wave used as the carrier signal may be a sine wave, a square wave, a triangle wave, a pulse, a rectangular wave, etc.

In addition, the carrier signal may be a continuous wave, or a discontinuous wave (i.e., interruption for a certain period of time is allowed).

Optionally, the carrier signal may be an existing signal in the 3GPP standard, for example, an SRS, a PUSCH, a PRACH, a PUCCH, a PDCCH, a PDSCH, a PBCH, or a WIFI signal or a blue tooth signal, etc.

Optionally, the carrier signal may also be implemented by a newly added signal, such as a newly added carrier signal dedicated to generating a back scattering signal.

It should be noted that in the embodiments of the present application, the power supply signal, the scheduling signal and the carrier signal may be the same signal, or may also be different signals. For example, the power supply signal may be used as the carrier signal, and the scheduling signal may also be used as the carrier signal, etc.

In order to further save power of the terminal device, a wake up receiver (WUR) is considered to be introduced, to receive a wake up signal. The wake up receiver has characteristics of extremely low cost, extremely low complexity and extremely low-power consumption, and it mainly receives the wake up signal (WUS) based on an envelope detection scheme. Therefore, the modulation scheme, waveform, or the like of the WUS received by the wake up receiver is different from those of the signal carried based on a physical downlink control channel (PDCCH). The wake up signal is mainly an envelope signal obtained by performing amplitude keying (Amplitude shift keying, ASK) modulation on the carrier signal. Demodulation of the envelope signal is also completed mainly based on the power provided by the wireless radio frequency signal to drive the low-power consumption circuit, so it may be passive. The wake up receiver may also be powered by the terminal. Regardless of the power supply scheme, the wake up receiver greatly reduces power consumption, compared to a traditional receiver of the UE. The wake up receiver may be combined with the UE, as an additional module of the UE's receiver, or may be used as a separate wake up function module of the UE.

A block diagram of a receiver system based on the wake up signal is shown in FIG. 6. The wake up receiver receives the wake up signal, and may indicate the UE to turn on a primary receiver if the UE is required to turn on the primary receiver. Otherwise, the primary receiver of the UE may be in a turned-off state.

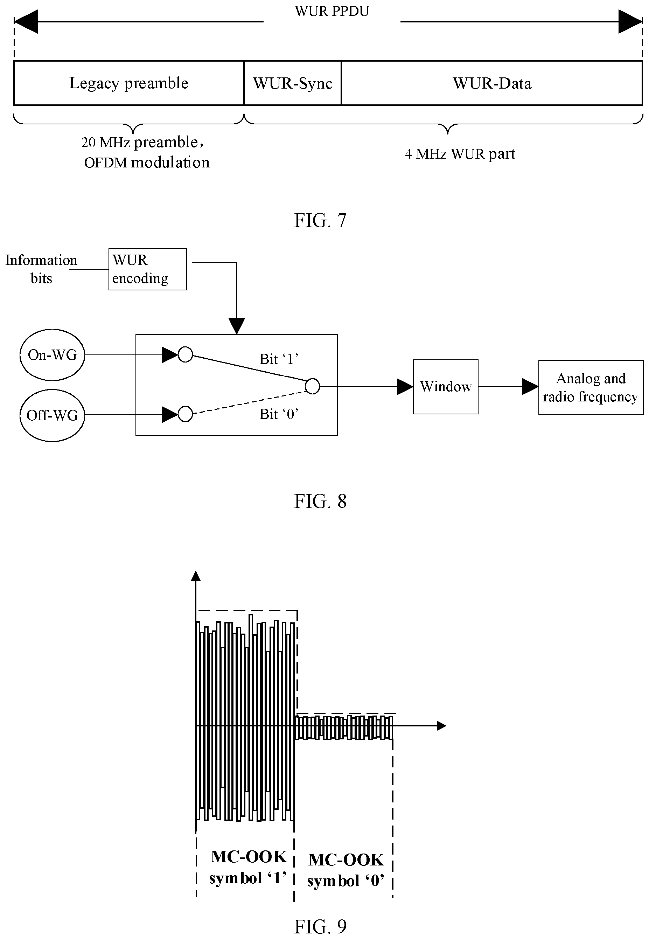

In some scenarios, a wake-up radio (WUR) signal is used to implement the power saving of devices. A WUR AP notifies a WUR non-AP STA of a power saving operation via a WUR wake-up frame. The wake-up frame is carried in a WUR physical layer protocol data unit (Physical layer Protocol Data Unit, PPDU) frame. As shown in FIG. 7, a WUR PPDU frame includes three parts: legacy preamble, WUR synchronization (WUR-Sync) and WUR data (WUR-Data). The function of the legacy preamble is to protect the WUR-Sync and WUR-Data parts, it is a non-WUR part reserved for a compatibility consideration, and it uses traditional orthogonal frequency-division multiplexing (OFDM) modulation and 20MHz bandwidth. WUR-Sync is used to help identify and demodulate the WUR-Data part, and the WUR-Data part is used to carry a WUR PSDU (Physical layer Service Data Unit).

The WUR-Sync part and the WUR-Data part use On-Off Keying (OOK) modulation and 4MHz in the 20MHz channel bandwidth. A modulation principle of OOK is to modulate the amplitude of the carrier signal into non-zero value and zero value, corresponding to On and Off, respectively, to represent information bits. OOK is also known as binary amplitude keying (binary amplitude shift keying, 2ASK). FIG. 8 is a schematic diagram of OOK modulation. The WUR-Data part carries user information. After the user information is encoded, OOK modulation is used to form MC-OOK symbols of a corresponding length.

The above OOK signal is generated by a multi-carrier (MC), so the OOK signal is called an MC-OOK signal. The MC-OOK signal may be an OOK signal generated by multi-carrier modulation such as OFDM modulation, which may maintain good compatibility with the OFDM system, thereby reducing the transmitter complexity introduced by implementing the WUR signal. FIG. 9 is a schematic diagram of an MC-OOK signal generated by a multi-carrier. By mapping the corresponding amplitude values to multiple subcarriers in the frequency domain, a waveform of a time domain signal transferred by Inverse Discrete Fourier Transform (IDFT) approximates a waveform formed by ASK modulation, where bit 1 is represented by a high level of the signal and bit 0 is represented by a low level of the signal.

For the sake of description, the WUS in the NR system and the wake up radio WUR signal in the WIFI system are collectively referred to as WUS. That is, the WUS in the following text may be a wake up signal or a wake up radio WUR signal, or may also refer to a signal with a similar function in future communication systems.

A receiving end of the WUS detects the WUS by an envelope detection scheme. The wake up receiver that detects the WUS by the envelope detection scheme has low complexity and power consumption. For signals modulated by ASK, OOK and FSK, the wake up receiver may demodulate the WUS by the envelope detection scheme.

Taking the MC-OOK signal as an example, by setting certain non-zero amplitude values for multiple subcarriers and performing IDFT transformation by the transmitter, corresponding on time domain waveform may be generated. Without assigning values to corresponding subcarriers, corresponding off time domain waveform may be generated, thereby implement ing OOK modulation based on the multi-carrier.

For example, for the WUR signal in the 802.11ba technology, central 13 subcarriers of 64-point IDFT are used to generate the on waveform, within a 20MHz bandwidth. For a symbol length of 2 µs, 6 subcarriers with subcarrier indexes k = (-6, -4, -2, 2, 4, 6) among the 13 subcarriers are assigned non-zero values, and other subcarriers are not assigned values. For a symbol length of 4 µs, 12 subcarriers with subcarrier indexes k = (-6, -5, ...-1, 1, 2, ... 6) among the 13 subcarriers are assigned non-zero values, and other subcarriers are not assigned values.

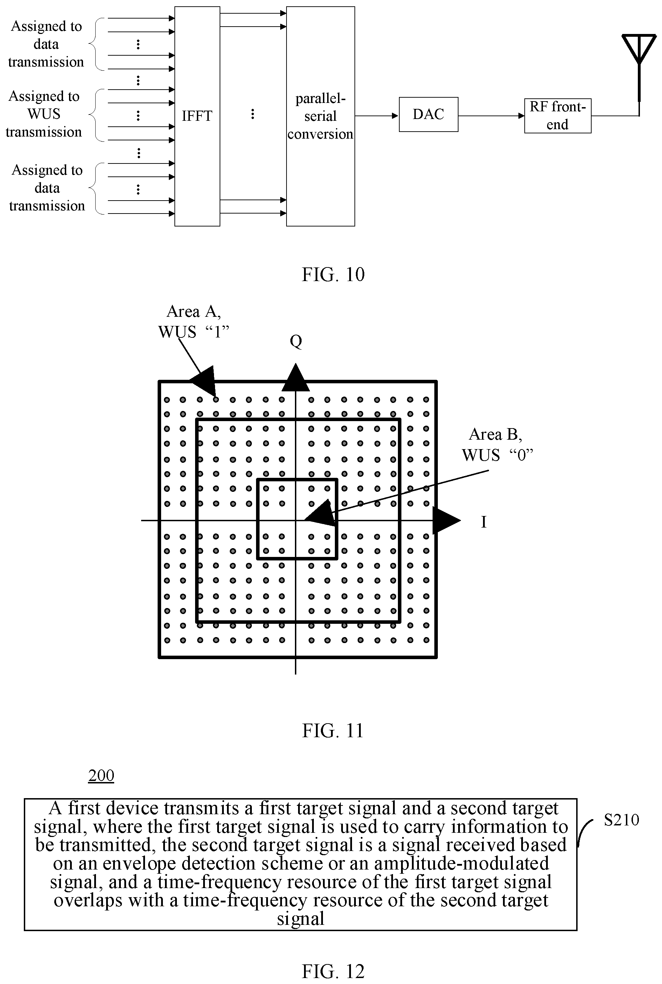

When the device needs to transmit both a WUS and a data signal, as shown in FIG. 10, the device may map the WUS and the data signal onto different subcarriers, and further process and transmit them by an OFDM transmitter. When generating the on signal in the WUS, the value assignment of the subcarrier carrying the signal needs to meet a requirement that the amplitude of the generated signal meets a modulation depth requirement, and that the amplitude of the signal is as flat as possible within the time domain symbol. Accordingly, the amplitude of the off signal is as low as possible compared to the amplitude of the on signal, to meet the modulation depth requirement. Taking 256QAM modulation as an example, the above requirement are met by mapping different constellation points (or modulated symbols) on the subcarriers. FIG. 11 is a constellation point distribution diagram of 256QAM modulation. When mapping, constellation points with greater amplitudes may be mapped to subcarriers to generate on signals, and constellation points with smaller amplitudes may be mapped to subcarriers to generate off signals. For the off signal, it may be implemented by setting the corresponding subcarrier as a null subcarrier.

Therefore, in the time domain symbols where the off signals are located, the modulated symbols mapped on the subcarriers occupied by the off signals only need to ensure that the time domain waveform meets the low level, and even the modulated symbols may not be mapped on these subcarriers. If WUS is not transmitted for a long time on certain time-frequency resources, this part of subcarriers may not be mapped with modulated symbols, which will cause a great waste of this part of time-frequency resources.

In related technologies, the receiver with extremely low-power consumption and complexity is used to save power or reduce the complexity and cost of the terminal, such as the aforementioned wake up receiver. In order to be compatible with existing systems and make full use of resources, taking the NR system as an example, when the terminal device uses the wake up receiver to receive a WUS, the WUS transmitted by the network device is expected to be compatible with the existing OFDM transmitter, and is expected to be multiplexed with the existing NR signal within the frequency band, rather than using a separate frequency band resource for the WUS. Although the WUR signal in the WiFi technology uses a central 4MHz in a 20 MHz channel bandwidth, other frequency domain resources within the channel bandwidth during the WUR signal transmission are not used for a signal transmission. Therefore, how to transmit such a signal to improve the spectrum resource utilization ratio is an urgent problem to be solved.

To facilitate the understanding of the technical solutions in the embodiments of the present application, the technical solutions of the present application are described in detail below through specific embodiments. The above related technologies, as optional solutions, may be arbitrarily combined with the technical solutions in the embodiments of the present application, which all fall within the protection scope of the embodiments of the present application. The embodiments of the present application include at least a part of the following contents.

FIG. 12 is a schematic diagram of a wireless communication method 200 according to the embodiments of the present application. As shown in FIG. 12, the method 200 includes at least a part of the following contents:
S210, transmitting, by a first device, a first target signal and a second target signal, where the first target signal is used to carry information to be transmitted, the second target signal is a signal received based on an envelope detection scheme or an amplitude-modulated signal, and a time-frequency resource of the first target signal overlaps with a time-frequency resource of the second target signal.

In some embodiments, a receiving end device of the first target signal and a receiving end device of the second target signal may be the same device, or may be different devices.

For example, the receiving end device of the first target signal and the receiving end device of the second target signal are both a second device.

For another example, the receiving end device of the first target signal is the second device, and the receiving end device of the second target signal is a third device.

In some embodiments, the first device may be a network device in the communication system, such as a base station in the cellular network, or an AP in the WIFI system, or may be a traditional terminal in the communication system, such as a UE in the cellular network, or an STA in the WIFI system, etc.

In some embodiments, the first target signal may be a data signal or a control signal, for example, a downlink data signal or a downlink control signal transmitted by the network device to a terminal device, or a sidelink data signal or a sidelink control signal transmitted by a terminal device to another terminal device.

As an example, the first target signal may be a downlink data channel, such as PDSCH, or a downlink control channel, such as PDCCH, or may be a downlink reference signal, such as a channel state information reference signal (Channel State Information Reference Signal, CSI-RS), etc.

As an example, the first target signal may be a sidelink data channel, such as a Physical Sidelink Shared Channel (PSSCH), or a sidelink control channel, such as a Physical Sidelink Control Channel (PSCCH), or may be a sidelink reference signal, etc.

In some embodiments, the second target signal is a signal received based on an envelope detection scheme or an amplitude-modulated signal, that is, the second target signal is a signal that carries information by amplitude changes.

As an example, the second target signal may be a WUS.

Optionally, the second target signal is a 2ASK-modulated (i.e., OOK-modulated) signal.

For example, the second target signal may include an on signal and an off signal.

In some embodiments, the second target signal may be received based on a first receiver, where the first receiver may be a low-power consumption and/or low complexity receiver, for example, the first receiver may be a wake up receiver.

In some embodiments, the receiving end device of the second target signal has the first receiver.

In some other embodiments, the receiving end device of the second target signal has the first receiver and a second receiver, where power consumption of the second receiver is higher than power consumption of the first receiver, and/or complexity of the second receiver is higher than complexity of the first receiver.

For example, the first receiver is a wake up receiver and the second receiver is a traditional receiver.

Optionally, if the second receiver is turned off, and the first receiver receives the WUS to wake up the second receiver, the first receiver may keep turned on all the time to receive the WUS, or may be turned on periodically to receive the WUS.

In some embodiments, the receiving end device of the first target signal may be a terminal device in the communication system, such as a UE in the cellular network, or an STA in the WIFI system, etc.

In some embodiments, the time-frequency resource of the first target signal includes a time domain resource and/or a frequency domain resource of the first target signal, and the time-frequency resource of the second target signal includes a time domain resource and/or a frequency domain resource of the second target signal.

In some embodiments, that the time-frequency resource of the first target signal overlaps with the time-frequency resource of the second target signal, may include:
that the time domain resource of the first target signal (e.g., time domain symbol) overlaps with the time domain resource of the second target signal (e.g., time domain symbol); and/or
that the frequency domain resource of the first target signal (e.g., subcarrier) overlaps with the frequency domain resource of the second target signal (e.g., subcarrier).

In some embodiments, that the time domain resource of the first target signal overlaps with the time domain resource of the second target signal may include:
that the time domain resource of the first target signal partially overlaps or completely overlaps with the time domain resource of the second target signal.

In some embodiments, that the frequency domain resource of the first target signal overlaps with the frequency domain resource of the second target signal may include:
that the frequency domain resource of the first target signal partially overlaps or completely overlaps with the frequency domain resource of the second target signal.

For example, the first device may multiplex the second target signal with the first target signal within a frequency band.

In some embodiments, the second target signal includes a first signal and a second signal, and a level of the first signal is higher than a level of the second signal. That is, the first signal is a high level signal, and the second signal is a low level signal.

In a specific embodiment, the second target signal is a WUS, the first signal may be an on signal, and the second signal may be an off signal.

In some embodiments, the time domain resource of the second target signal includes:
a time domain symbol occupied by the first signal; and/or a time domain symbol occupied by the second signal.

In some embodiments, the frequency domain resource of the second target signal includes:
a subcarrier occupied by the first signal; and/or a subcarrier occupied by the second signal.

In some embodiments, amplitudes of the first signal and the second signal need to reach a certain modulation depth, so that the receiving end can correctly demodulate the signal when receiving the signal based on the envelope detection scheme.

For example, a ratio of an amplitude of the first signal to an amplitude of the second signal is greater than a first threshold, and/or a difference between the amplitude of the first signal and the amplitude of the second signal is greater than a second threshold.

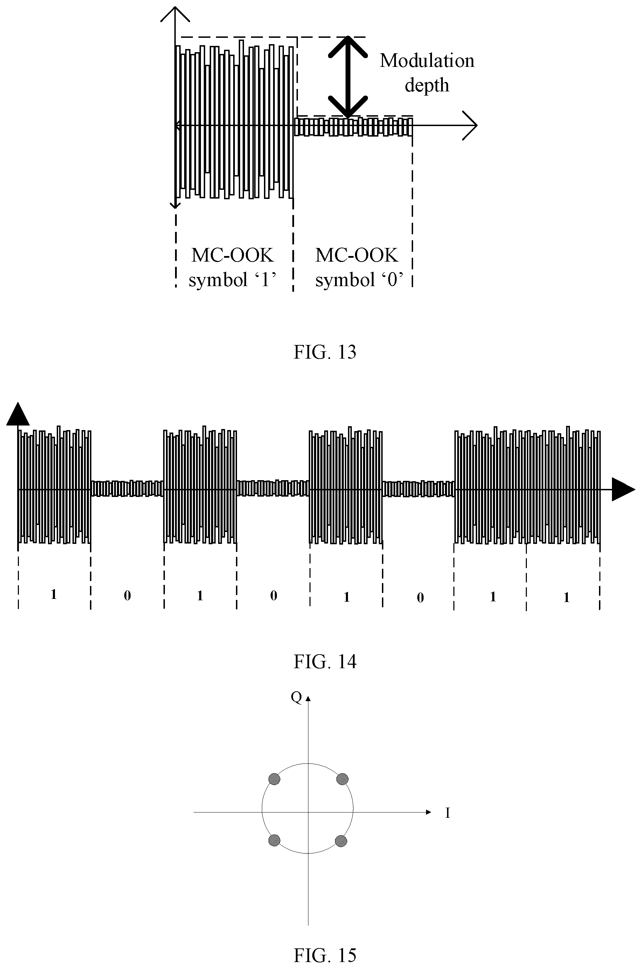

Optionally, as shown in FIG. 13, the second target signal is an MC-OOK signal in the WIFI system, and the on signal and the off signal need to reach a certain modulation depth, and for example, a ratio of an average power of the on signal to an average power of the off signal needs to be at least 20dB.

In some embodiments, the second target signal is amplitude-modulated signal equivalent in the time domain, which is generated by mapping a modulated symbol to the subcarrier occupied by the second target signal. As shown in FIG. 14, a high level represents the first signal, which is used to carry bit 1, and a low level represents the second signal, which is used to carry bit 0.

In some embodiments, in order to generate the first signal, the modulated symbol mapped onto the subcarrier occupied by the first signal needs to have a higher amplitude value. For example, constellation points in the area A in the constellation point distribution diagram corresponding to 256QAM modulation shown in FIG. 11 are used.

In some embodiments, in order to generate the second signal, the modulated symbol mapped onto the subcarrier occupied by the second signal needs to meet the low level and meet the aforementioned modulation depth. For example, the modulated symbol mapped to the subcarrier occupied by the second signal may be the constellation point in the area B in the constellation point distribution diagram corresponding to the 256QAM modulation shown in FIG. 11, or the constellation point in QPSK modulation shown in FIG. 15.

In some embodiments, the first signal is obtained by mapping a first modulated symbol onto a subcarrier occupied by the first signal, on a time domain symbol occupied by the first signal, and the second signal is obtained by mapping a second modulated symbol onto a subcarrier occupied by the second signal, on a time domain symbol occupied by the second signal.

The first modulated symbol is obtained based on a first modulation scheme, and the second modulation scheme is obtained based on a second modulation scheme, where a modulation order of the first modulation scheme is higher than or equal to a modulation order of the second modulation scheme.

For example, the first modulated symbol may be a constellation point with a larger amplitude value under the first modulation scheme, and the second modulated symbol may be a constellation point with a smaller amplitude value under the second modulation scheme.

As an example but not a limitation, the first modulation scheme may be 64QAM, 256QAM, 1024QAM, etc.

As an example but not a limitation, the second modulation scheme may be BPSK, QPSK, 16QAM, 64QAM, etc.

Optionally, the second modulation scheme is determined according to the modulation order of the first modulation scheme and a constellation point corresponding to the first modulation scheme.

The following describes a multiplexing scheme for resources of the first target signal and the second target signal, in conjunction with specific embodiments.

Embodiment 1: the time-frequency resource of the second signal overlaps with the time-frequency resource of the first target signal.

In the embodiment 1, a transmission of the first target signal multiplexes the time-frequency resource of the second signal.

In an embodiment, the time domain symbol occupied by the second signal overlaps with the time domain symbol occupied by the first target signal.

In an embodiment, the first device may multiplex the time domain symbol occupied by the second signal to transmit all or a part of the information to be transmitted. For example, on the time domain symbol occupied by the second signal, the modulated symbol obtained by modulating all or a part of the information to be transmitted is mapped to the subcarrier occupied by the second signal and then used as the second signal.

As mentioned above, on the time domain symbol where the second signal is located, the modulated symbol mapped on the subcarrier occupied by the second signal only needs to ensure that the time domain waveform meets the low level, and even the modulated symbols may not be mapped on these subcarriers.

Therefore, in some embodiments, the first device may carry the first target signal meeting the low level characteristic by the time-frequency resource occupied by the second signal.

For example, first information in the information to be transmitted is modulated to obtain a second modulated symbol, and the first information includes all or a part of the information to be transmitted. Further, on the time domain symbol occupied by the second signal, the second modulated symbol is mapped onto the subcarrier occupied by the second signal, as the second signal.

When a modulation scheme with a low modulation order is used to modulate the first information to generate the modulated symbol, from a constellation point distribution diagram corresponding to the QPSK modulation scheme as shown in FIG. 15, it may be seen that its amplitude is relatively low, and the modulated symbol generated by modulating the first information is mapped on the subcarrier occupied by the second signal, then the generated time domain signal may be not only used to carry the first information, but also may meet the low level requirement, i.e., meet the characteristic of the second signal, thereby ensuring that the receiving end can correctly demodulate the second signal.

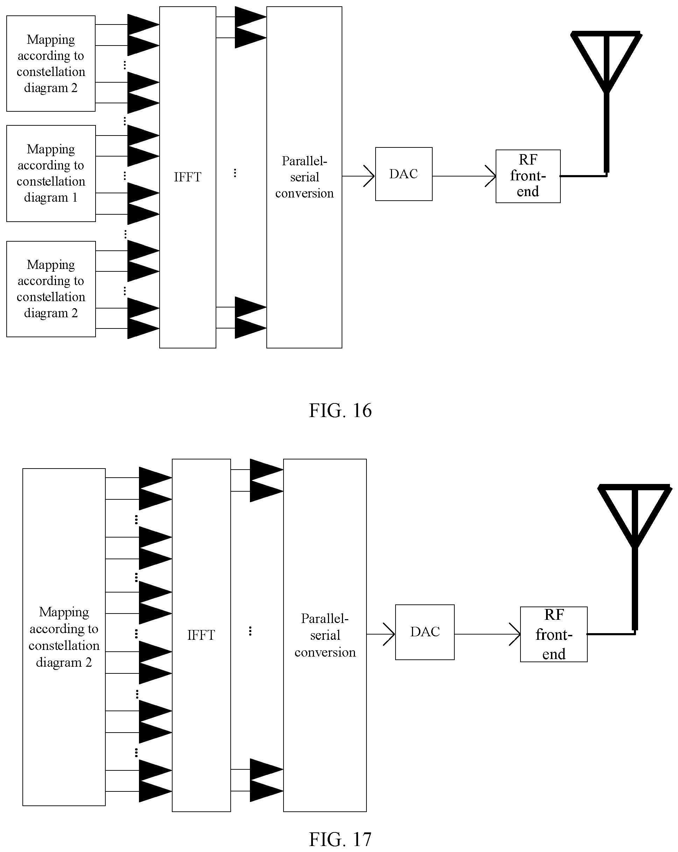

In some embodiments, for the scenario in which the data signal and the WUS coexist in FIG. 10, the first device may map the modulated symbol based on schemes shown in FIG. 16 and FIG. 17.

As shown in FIG. 16, on the time domain symbol occupied by the first signal, the modulated symbol corresponding to the data to be transmitted obtained based on constellation diagram 2 is mapped onto the subcarrier occupied by the data signal, and the modulated symbol corresponding to the first signal obtained based on constellation diagram 1 is mapped onto the subcarrier occupied by the first signal.

As shown in FIG. 17, on the time domain symbol occupied by the second signal, the modulated symbol corresponding to the data to be transmitted obtained based on constellation diagram 2 is mapped onto the subcarrier occupied by the second signal.

Constellation diagram 1 corresponds to the first modulation scheme, constellation diagram 2 corresponds to the second modulation scheme, and the modulation order of the first modulation scheme is lower than the modulation order of the second modulation scheme.

In some embodiments, a time-frequency resource configuration for transmitting the second target signal may be predefined, or configured by the first device.

In some embodiments, the time-frequency resource configuration for transmitting the second target signal is periodic, and the cycle is also called a duty cycle.

Optionally, a time domain resource configuration for transmitting the second target signal includes but is not limited to at least one of:
a duration, a frequency domain bandwidth, and a duty cycle of the time domain resource for transmitting the second target signal.

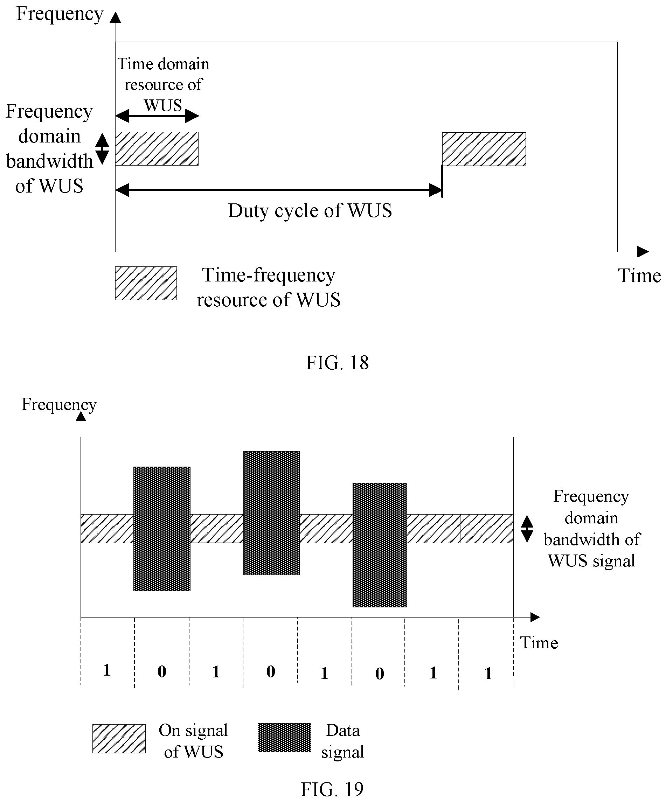

Taking the first target signal being a WUS as an example, FIG. 18 is an example of a time-frequency resource for transmitting a WUS.

In some embodiments, the relative position of the first signal and the second signal in the second target signal is fixed. For example, the second target signal is a fixed sequence, and when the position of the time-frequency resource of the second target signal is known, the position of the time-frequency resource of the first signal and the position of the time-frequency resource of the second signal may be determined.

In some other embodiments, the relative position of the first signal and the second signal in the second target signal is not fixed. In this case, determining the position of the time-frequency resource of the first signal and the position of the time-frequency resource of the second signal is also not fixed.

In some embodiments, the scheduled time-frequency resource of the first target signal may include all or a part of the time-frequency resource of the second target signal.

For example, the first device transmits first configuration information to the second device, the first configuration information being used to configure a time-frequency resource for transmitting the first target signal, where the time-frequency resource for transmitting the first target signal includes all or a part of a time-frequency resource for transmitting the second target signal, and the second device is a receiving end device of the first target signal.

In some embodiments, the scheduled time-frequency resource of the first target signal includes all of the time-frequency resource of the second target signal.

For example, the scheduled time-frequency resource of the first target signal includes a time-frequency resource for transmitting the first signal and a time-frequency resource for transmitting the second signal.

In some other embodiments, the scheduled time-frequency resource of the first target signal includes a part of the time-frequency resource of the second target signal. For example, the scheduled time-frequency resource of the first target signal includes the time-frequency resource for transmitting the second signal.

In some embodiments, when the first device transmits a part of the information to be transmitted by using the time-frequency resource for transmitting the second signal, the first device needs to modulate the part of the information by using a lower modulation order. Information transmitted by using the lower modulation order on the time-frequency resource for transmitting the second signal, is denoted as first information, and then the time-frequency resource used by the signal for transmitting the first information includes the time-frequency resource for transmitting the second signal, but does not include the subcarrier that does not carry the second target signal, on the time domain symbol for transmitting the first signal.

Taking an example in which the first target signal is a data signal and the second target signal is a WUS, as shown in FIG. 19, the time-frequency resource for transmitting the data signal includes the time-frequency resource for transmitting the off signal of the WUS, but does not include the subcarrier that does not carry the WUS, on the time domain symbol for transmitting the on signal of the WUS.

In some embodiments, when the scheduled time-frequency resource for transmitting the first target signal includes the time-frequency resource for transmitting the first signal, the second device needs to know the specific position of the time-frequency resource of the first signal, and/or whether the first device transmits the first signal on the time-frequency resource for transmitting the first signal (or whether to perform rate matching).

Scheme 1: it is pre-agreed that the second device performs rate matching on the time-frequency resource for transmitting the first signal. That is, the second device punctures the time-frequency resource where the first signal is located, and does not take it as the time-frequency resource for carrying the first target signal.

That is, the second device performs rate matching on the time-frequency resource for transmitting the first signal, by default.

In an implementation, the information transmitted in the second target signal is fixed, and for example, the second target signal is a fixed sequence. Then, if the first device transmits the second target signal in the time-frequency resource for transmitting the second target signal, the time-frequency resource where the first signal is located is fixed, and then the second device may determine the position of the time-frequency resource where the first signal is located according to the position of the time-frequency resource for transmitting the second target signal, and further perform rate matching on the time-frequency resource where the first signal is located.

Optionally, in this implementation, the time-frequency resource for transmitting the second target signal is a periodic time-frequency resource, and the first device periodically transmits the second target signal, and then, the second device may perform rate matching on the time-frequency resource for transmitting the first signal.

Scheme 2: the second device performs rate matching on the time-frequency resource for transmitting the first signal based on an indication of the first device.

For example, the first device may transmit first indication information to the second device, where the first indication information is used to indicate whether to perform rate matching on the time-frequency resource for transmitting the first signal, or whether the first device transmits the first signal on the time-frequency resource for transmitting the first signal.

In some embodiments, the first indication information may be 1 bit, used to indicate whether to perform rate matching on the time-frequency resource for transmitting the first signal.

In some embodiments, if the first device indicates to perform rate matching on the time-frequency resource for transmitting the first signal, the second device performs rate matching on the time-frequency resource for transmitting the first signal; otherwise, does not perform rate matching on the time-frequency resource for transmitting the first signal.

In some embodiments, the position of the time-frequency resource of the second target signal may be predefined, and correspondingly, the position of the time-frequency resource of the first signal is also predefined, or the position of the time-frequency resource of the first signal is indicated by the first device. For example, it is indicated when scheduling the time-frequency resource of the first target signal.

In some embodiments, the first indication information may be carried in the first configuration information. For example, when the scheduled time-frequency resource of the first target signal includes the time-frequency resource for transmitting the first signal, at the same time, the first device indicates whether to perform rate matching on the time-frequency resource for transmitting the first signal.

In some embodiments, the first indication information is carried by at least one signaling as follows:
a radio resource control (Radio Resource Control, RRC) signaling, a media access control control element (Media Access Control Control Element, MAC CE), or downlink control information (Downlink Control Information, DCI).

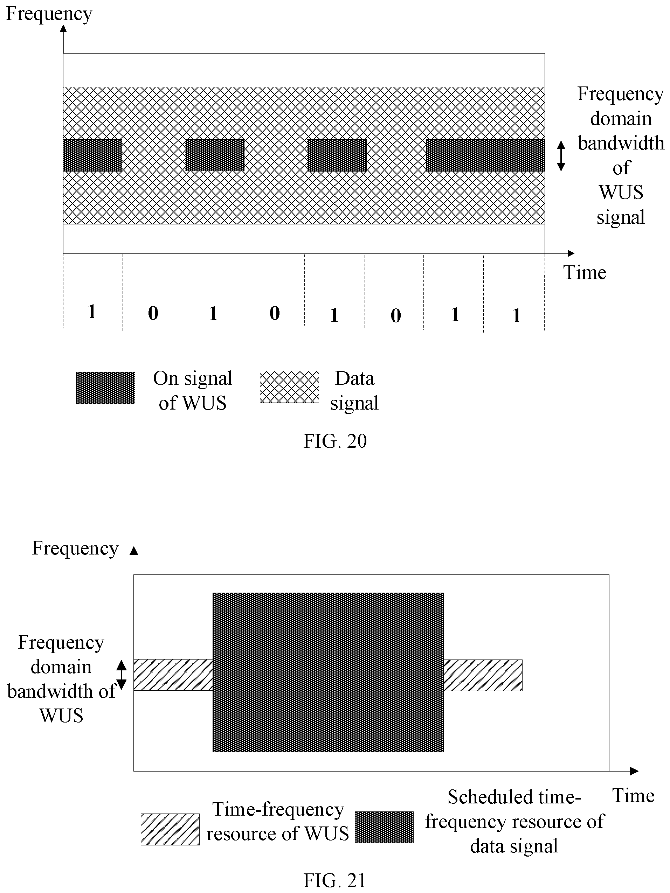

Taking an example in which the first target signal is a data signal and the second target signal is a WUS, as shown in FIG. 20, the scheduled time-frequency resource for transmitting the data signal includes the time-frequency resource for transmitting the WUS. The receiving end of the data signal may perform rate matching on the time-frequency resource occupied by the on signal in the WUS signal, thereby receiving the data signal by a time-frequency resource except the time-frequency resource occupied by the on signal in the scheduled time-frequency resource.

Embodiment 2: the frequency domain resource of the second target signal overlaps with the frequency domain resource of the first target signal.

In the embodiment 2, a transmission of the first target signal at least multiplexes the frequency domain resource of the second target signal.

In some embodiments, the first device maps the modulated symbol obtained by modulating the information to be transmitted onto the subcarrier occupied by the second target signal on the time domain symbol on which the second target signal is not transmitted.

Embodiment 2-1: the time domain resource of the second target signal does not overlap with the time domain resource of the first target signal.

That is, the transmission of the first target signal only multiplexes the frequency domain resource of the second target signal, and does not multiplex the time domain resource of the second target signal.

Taking an example in which the first target signal is a data signal and the second target signal is a WUS, as shown in FIG. 21, the scheduled frequency domain resource of the data signal may overlap with the frequency domain resource of the WUS, but the scheduled time domain resource of the data signal does not overlap with the time domain resource of the WUS.

Embodiment 2-2: the time domain resource of the second target signal overlaps with the time domain resource of the first target signal.

That is, the transmission of the first target signal multiplexes the frequency domain resource and the time domain resource of the second target signal.

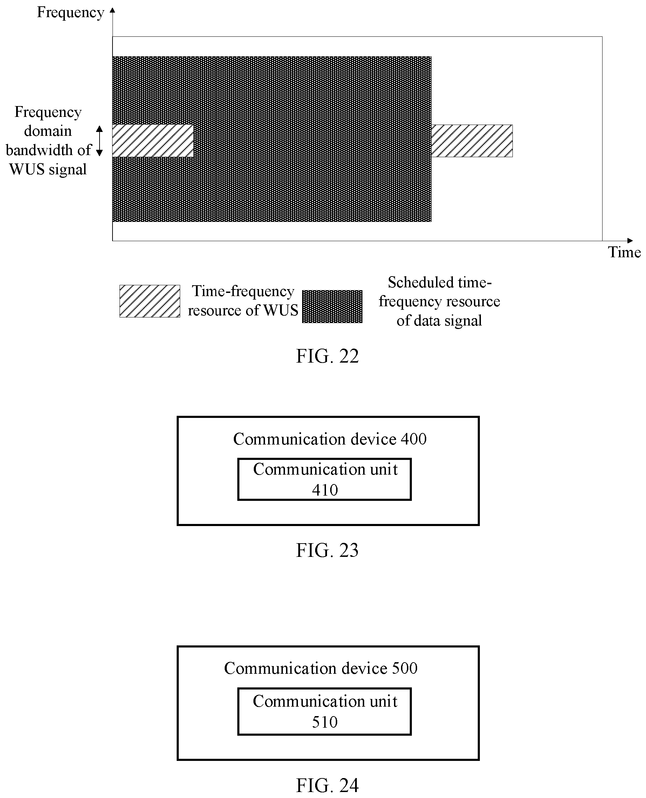

Taking an example in which the first target signal is a data signal and the second target signal is a WUS, as shown in FIG. 22, the scheduled frequency domain resource of the data signal may overlap with the frequency domain resource of the WUS, and the scheduled time domain resource of the data signal also overlaps with the time domain resource of the WUS.

In some embodiments, when the scheduled time-frequency resource for transmitting the first target signal includes the time-frequency resource for transmitting the WUS, the second device may perform rate matching on the time-frequency resource for transmitting the second target signal, or may perform rate matching on the time-frequency resource for transmitting the second target signal according to the indication of the first device.

Scheme 1: it is pre-agreed that the second device performs rate matching on the time-frequency resource for transmitting the second target signal. That is, the second device punctures the time-frequency resource where the second target signal is located.

That is, the second device performs rate matching on the time-frequency resource for transmitting the second target signal, by default.

In some embodiments, when the time-frequency resource for transmitting the second target signal is a preset time-frequency resource, the first device may decide whether to transmit the second target signal. When the first device does not transmit the second target signal, the preset time-frequency resource may be used to transmit the first target signal. When the scheduled time-frequency resource for transmitting the first target signal includes the time-frequency resource for transmitting the second target signal, the second device needs to perform rate matching on the time-frequency resource for transmitting the second target signal.

Scheme 2: the second device performs rate matching on the time-frequency resource for transmitting the second target signal based on the indication of the first device.

For example, the first device may transmit second indication information to the second device, where the second indication information is used to indicate whether to perform rate matching on the time-frequency resource for transmitting the second target signal, or whether the first device transmits the second target signal on the time-frequency resource for transmitting the second target signal.

In some embodiments, the second indication information may be 1 bit, used to indicate whether to perform rate matching on the time-frequency resource for transmitting the second target signal.

In some embodiments, if the first device indicates to perform rate matching on the time-frequency resource for transmitting the second target signal, the second device performs rate matching on the time-frequency resource for transmitting the second target signal; otherwise, does not perform rate matching on the time-frequency resource for transmitting the second target signal.

In some embodiments, the second indication information may be carried in second configuration information, where the second configuration information is used to configure the time-frequency resource for transmitting the first target signal. For example, when the scheduled time-frequency resource of the first target signal includes the time-frequency resource for transmitting the second target signal, at the same time, the first device indicates whether to perform rate matching on the time-frequency resource for transmitting the second target signal.

In some embodiments, the second indication information is carried by at least one signaling as follows: an RRC signaling, an MAC CE, or DCI.

In some embodiments, when the second device determines to perform rate matching on the time-frequency resource of the second target signal, the second device may perform rate matching only on the time-frequency resource for transmitting the first signal. In this case, the first device may multiplex the time-frequency resource for transmitting the second signal to transmit the first target signal, by using the scheme described in the embodiment 1.

In some embodiments, when the second device determines to perform rate matching on the time-frequency resource of the second target signal, the second device may perform rate matching on both the time-frequency resource for transmitting the first signal and the time-frequency resource for transmitting the second signal. In this case, the first device may not use the time-frequency resource for transmitting the second signal to transmit the first target signal.

In summary, the embodiment 1 may implement the multiplexing of the first target signal and the second target signal at the time domain symbol granularity of the second signal, and the embodiment 2 may implement the multiplexing of the time-frequency resource granularity of the second target signal.

It should be noted that the above only takes the first target signal as a data signal as an example, but does not exclude the multiplexing of the second target signal with other signals, such as a control signal, a reference signal, etc.

It should also be noted that, the above only takes the second target signal as a WUS as an example, but does not exclude the multiplexing of the first target signal with a non-WUS signal, and for example, the second target signal may also be other signals received by using the envelope detection scheme. For example, for the internet of things (IoT) device with extremely low-power consumption and complexity in zero-power consumption communication, such as an ambient powered IoT (Ambient Powered IoT, AMP IoT) device, the signal received by such a device is mainly a signal modulated based on ASK, such as OOK signal, etc. The signal received by such a device is not only a signal used for waking up, but also a signal used for transmitting user data.

It should be understood that the embodiments of the present application may be applicable to the multiplexing of WUS and NR signals in the NR system, and may also be applicable to the multiplexing of WUS and non-WUS signals in other communication systems that use the multi-carrier modulation air interface technology, such as WIFI, etc.

It should also be noted that the embodiments of the present application only take the OOK signal as an example to describe the signal received by using the envelope detection scheme, but it may also be signals generated by using other modulation schemes, such as ASK, FSK modulation, etc, which all essentially require the receiving end to detect the high and low levels of the signal by the envelope detection scheme to demodulate the signal.

Therefore, in the embodiments of the present application, when the first device needs to transmit the first target signal and the second target signal, the time-frequency resource of the second target signal may be multiplexed to transmit the second target signal, which is beneficial to improving the resource utilization ratio of the system.

In some implementations, the first target signal is transmitted by multiplexing the time domain symbol of the second signal.

In some other implementations, the first target signal is transmitted by multiplexing the frequency domain resource of the second target signal.

The method embodiments of the present application have been described in detail above with reference to FIG. 12 to FIG. 22. Apparatus embodiments of the present application will be described in detail below with reference to FIG. 23 to FIG. 42. It should be understood that the apparatus embodiments and the method embodiments correspond to each other, and similar descriptions of the apparatus embodiments may refer to the method embodiments.

FIG. 38 shows a schematic block diagram of a terminal device 400 according to the embodiments of the present application. As shown in FIG. 38, the terminal device 400 includes:
a communication unit 410, configured to transmit a first target signal and a second target signal, where the first target signal is used to carry information to be transmitted, the second target signal is a signal received based on an envelope detection scheme or an amplitude-modulated signal, and a time-frequency resource of the first target signal overlaps with a time-frequency resource of the second target signal.

In some embodiments, the second target signal includes a first signal and a second signal, and a level of the first signal is higher than a level of the second signal.

In some embodiments, a ratio of an amplitude of the first signal to an amplitude of the second signal is greater than a first threshold, and/or a difference between the amplitude of the first signal and the amplitude of the second signal is greater than a second threshold.

In some embodiments, a time domain resource of the second target signal includes at least one of:
a time domain symbol occupied by the first signal; or
a time domain symbol occupied by the second signal.

In some embodiments, a frequency domain resource of the second target signal includes at least one of:
a subcarrier occupied by the first signal; or
a subcarrier occupied by the second signal.

In some embodiments, a time-frequency resource of the second signal overlaps with the time-frequency resource of the first target signal.

In some embodiments, a time domain symbol occupied by the second signal overlaps with a time domain symbol occupied by the first target signal.

In some embodiments, the first signal is obtained by mapping a first modulated symbol onto a subcarrier occupied by the first signal, on a time domain symbol occupied by the first signal; and
the second signal is obtained by mapping a second modulated symbol onto a subcarrier occupied by the second signal, on a time domain symbol occupied by the second signal, where the second modulated symbol is obtained by modulating first information in the information to be transmitted, and the first information includes all or a part of the information to be transmitted.

In some embodiments, the first modulated symbol is obtained based on a first modulation scheme, and the second modulated symbol is obtained based on a second modulation scheme, where a modulation order of the first modulation scheme is higher than or equal to a modulation order of the second modulation scheme.

In some embodiments, the second modulation scheme is determined according to the modulation order of the first modulation scheme and a constellation point corresponding to the first modulation scheme.

In some embodiments, the communication unit 410 is further configured to:
transmit first configuration information to a second device, the first configuration information being used to configure the time-frequency resource for transmitting the first target signal, where the time-frequency resource for transmitting the first target signal includes all or a part of the time-frequency resource for transmitting the second target signal, and the second device is a receiving end device of the first target signal.

In some embodiments, that the time-frequency resource for transmitting the first target signal includes all of the time-frequency resource for transmitting the second target signal, includes:
that the time-frequency resource for transmitting the first target signal includes a time-frequency resource for transmitting the first signal and a time-frequency resource for transmitting the second signal.

In some embodiments, that the time-frequency resource for transmitting the first target signal includes the part of the time-frequency resource for transmitting the second target signal, includes:
that the time-frequency resource for transmitting the first target signal includes a time-frequency resource for transmitting the second signal.

In some embodiments, the communication unit 410 is further configured to:
transmit first indication information to the second device, where the first indication information is used to indicate whether to perform rate matching on a time-frequency resource for transmitting a first signal.

In some embodiments, the first indication information is carried by at least one signaling as follows:
a radio resource control (RRC) signaling, a media access control control element (MAC CE), or downlink control information (DCI).

In some embodiments, a frequency domain resource of the second target signal overlaps with a frequency domain resource of the first target signal.

In some embodiments, a time domain resource of the second target signal does not overlap with a time domain resource of the first target signal.

In some embodiments, a time domain resource of the second target signal overlaps with a time domain resource of the first target signal.

In some embodiments, the communication unit 410 is further configured to: transmit second indication information to a second device, where the second indication information is used to indicate whether to perform rate matching on the time-frequency resource of the second target signal.

In some embodiments, the second indication information is carried by at least one signaling as follows: an RRC signaling, an MAC CE, or DCI.

In some embodiments, the second target signal includes a wake up signal (WUS).

Optionally, in some embodiments, the communication unit mentioned above may be a communication interface or a transceiver, or may be an input/output interface of a communication chip or a system on chip.

It should be understood that the communication device 400 according to the embodiments of the present application may correspond to the communication device in the method embodiments of the present application. The above-mentioned and other operations and/or functions of each unit in the communication device 500 are respectively to implement the corresponding procedures of the communication device in the methods shown in FIG. 12 to FIG. 22, which will not be repeated here for the sake of brevity.

FIG. 24 shows a schematic block diagram of a communication device 500 according to the embodiments of the present application. As shown in FIG. 24, the communication device 500 includes: a communication unit 510, configured to receive a first target signal transmitted by a first device, where the first target signal is used to carry information to be transmitted, a time-frequency resource of the first target signal overlaps with a time-frequency resource of a second target signal transmitted by the first device, and the second target signal is a signal received based on an envelope detection scheme or an amplitude-modulated signal.

In some embodiments, the second target signal includes a first signal and a second signal, and a level of the first signal is higher than a level of the second signal.

In some embodiments, a ratio of an amplitude of the first signal to an amplitude of the second signal is greater than a first threshold, and/or a difference between the amplitude of the first signal and the amplitude of the second signal is greater than a second threshold.

In some embodiments, a time domain resource of the second target signal includes at least one of:
a time domain symbol occupied by the first signal, or a time domain symbol occupied by the second signal.

In some embodiments, a frequency domain resource of the second target signal includes at least one of:
a subcarrier occupied by the first signal, or a subcarrier occupied by the second signal.

In some embodiments, a time-frequency resource of the second signal overlaps with the time-frequency resource of the first target signal.

In some embodiments, a time domain symbol occupied by the second signal overlaps with a time domain symbol occupied by the first target signal.

In some embodiments, the first signal is obtained by mapping a first modulated symbol onto a subcarrier occupied by the first signal, on a time domain symbol occupied by the first signal; and
the second signal is obtained by mapping a second modulated symbol onto a subcarrier occupied by the second signal, on a time domain symbol occupied by the second signal, where the second modulated symbol is obtained by modulating first information in the information to be transmitted, and the first information includes all or a part of the information to be transmitted.

In some embodiments, the first modulated symbol is obtained based on a first modulation scheme, and the second modulated symbol is obtained based on a second modulation scheme, where a modulation order of the first modulation scheme is higher than or equal to a modulation order of the second modulation scheme.

In some embodiments, the second modulation scheme is determined according to the modulation order of the first modulation scheme and a constellation point corresponding to the first modulation scheme.

In some embodiments, the communication unit 510 is further configured to:
receive first configuration information transmitted by the first device, the first configuration information being used to configure the time-frequency resource for transmitting the first target signal, where the time-frequency resource for transmitting the first target signal includes all or a part of the time-frequency resource for transmitting the second target signal, and the communication device is a receiving end device of the first target signal.

In some embodiments, that the time-frequency resource for transmitting the first target signal includes all of the time-frequency resource for transmitting the second target signal, includes:
that the time-frequency resource for transmitting the first target signal includes a time-frequency resource for transmitting the first signal and a time-frequency resource for transmitting the second signal.

In some embodiments, that the time-frequency resource for transmitting the first target signal includes the part of the time-frequency resource for transmitting the second target signal, includes:
that the time-frequency resource for transmitting the first target signal includes a time-frequency resource for transmitting a second signal.

In some embodiments, the communication unit 500 further includes:
a processing unit, configured to perform rate matching on the time-frequency resource for transmitting the first signal.

In some embodiments, the communication unit 500 further includes:
a processing unit, configured to determine, according to first indication information transmitted by the first device, whether to perform rate matching on a time-frequency resource for transmitting the first signal, where the first indication information is used to indicate whether to perform rate matching on the time-frequency resource for transmitting the first signal.

In some embodiments, the first indication information is carried by at least one signaling as follows:
a radio resource control (RRC) signaling, a media access control control element (MAC CE), or downlink control information (DCI).

In some embodiments, a frequency domain resource of the second target signal overlaps with a frequency domain resource of the first target signal.

In some embodiments, a time domain resource of the second target signal does not overlap with a time domain resource of the first target signal.

In some embodiments, a time domain resource of the second target signal overlaps with a time domain resource of the first target signal.

In some embodiments, the communication unit 500 further includes:
a processing unit, configured to perform rate matching on the time-frequency resource of the second target signal.

In some embodiments, the communication unit 500 further includes: a processing unit, configured to determine, according to second indication information transmitted by the first device, whether to perform rate matching on the time-frequency resource of the second target signal, where the second indication information is used to indicate whether to perform rate matching on the time-frequency resource of the second target signal.

In some embodiments, the second indication information is carried by at least one signaling as follows::
an RRC signaling, an MAC CE, or DCI.

In some embodiments, performing, by the communication device, rate matching on the time-frequency resource of the second target signal, includes:
performing, by the communication device, rate matching on the time-frequency resource for transmitting the first signal; or
performing, by the communication device, rate matching on the time-frequency resource for transmitting the first signal and the time-frequency resource for transmitting the second signal.

In some embodiments, the second target signal includes a wake up signal (WUS).

Optionally, in some embodiments, the communication unit mentioned above may be a communication interface or a transceiver, or may be an input/output interface of a communication chip or a system on chip. The processing unit mentioned above may be one or more processors.

It should be understood that the communication device 500 according to the embodiments of the present application may correspond to the second device in the method embodiments of the present application. The above-mentioned and other operations and/or functions of each unit in the communication device 500 are respectively to implement the corresponding procedures of the second device in the methods shown in FIG. 12 to FIG. 22, which will not be repeated here for the sake of brevity.

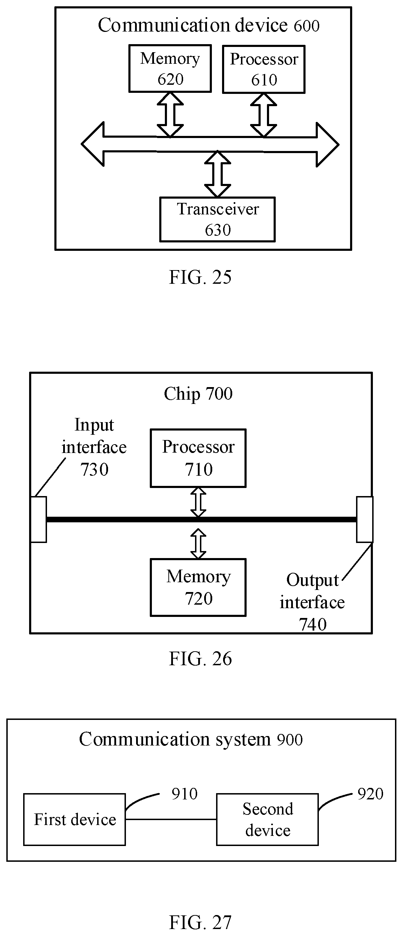

FIG. 25 is a schematic structural diagram of a communication device 600 provided in the embodiments of the present application. The communication device 600 shown in FIG. 25 includes a processor 610, and the processor 610 may call and run a computer program from a memory to implement the method in the embodiments of the present application.

Optionally, as shown in FIG. 25, the communication device 600 may further include a memory 620. The processor 610 may call and run a computer program from the memory 620, to implement the method in the embodiments of the present application.

The memory 620 may be a separate device independent from the processor 610, or may be integrated into the processor 610.

Optionally, as shown in FIG. 25, the communication device 600 may further include a transceiver 630. The processor 610 may control the transceiver 630 to communicate with other devices, and specifically, to transmit information or data to other devices, or receive information or data transmitted by other devices.

The transceiver 630 may include a transmitter and a receiver. The transceiver 630 may further include an antenna (antennas), and the number of antennas may be one or more.

Optionally, the communication device 600 may specifically be the first device of the embodiments of the present application, and the communication device 600 may implement corresponding procedures implemented by the first device in the various methods of the embodiments of the present application, which will not be repeated here for the sake of brevity.

Optionally, the communication device 600 may specifically be the second device of the embodiments of the present application, and the communication device 600 may implement the corresponding procedures implemented by the second device in the various methods of the embodiments of the present application, which will not be repeated here for the sake of brevity.

FIG. 26 is a schematic structural diagram of a chip in the embodiments of the present application. The chip 700 shown in FIG. 26 includes a processor 710, the processor 710 may call and run a computer program from a memory to implement the method in the embodiments of the present application.

Optionally, as shown in FIG. 26, the chip 700 may further include a memory 720. The processor 710 may call and run a computer program from the memory 720 to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to acquire information or data transmitted by other devices or chips.

Optionally, the chip 700 may further include an output interface 740. The processor 710 may control the output interface 740 to communicate with other devices or chips, and specifically, to output information or data to other devices or chips.

Optionally, the chip may be applied to the second device in the embodiments of the present application, and the chip may implement the corresponding procedures implemented by the second device in the various methods of the embodiments of the present application, which will not be repeated here for the sake of brevity.

Optionally, the chip may be applied to the first device in the embodiments of the present application, and the chip may implement the corresponding procedures implemented by the first device in the various methods of the embodiments of the present application, which will not be repeated here for the sake of brevity.

It should be understood that the chip mentioned in the embodiments of the present application may also be called a system on chip, a system chip, a chip system or a system-on-chip chip, etc.

FIG. 27 is a schematic block diagram of a communication system 900 provided in the embodiments of the present application. As shown in FIG. 42, the communication system 900 includes a first device 910 and a second device 920.

The first device 910 may be used to implement the corresponding functions implemented by the first device in the above method, and the second device 920 may be used to implement the corresponding functions implemented by the second device in the above method, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the first device in the embodiments of the present application, and the computer program causes a computer to perform the corresponding procedure implemented by the first device in the various methods of the embodiments of the present application, which will not be repeated here for the sake of brevity.

Optionally, the computer-readable storage medium may be applied to the second device in the embodiments of the present application, and the computer program causes a computer to perform the corresponding procedure implemented by the second device in various methods of the embodiments of the present application, which will not be repeated here for the sake of brevity.

The embodiments of the present application further provide a computer program product including a computer program instruction.

Optionally, the computer program product may be applied to the first device in the embodiments of the present application, and the computer program instruction causes a computer to perform the corresponding procedure implemented by the first device in the various methods of the embodiments of the present application, which will not be repeated here for the sake of brevity.

Optionally, the computer program product may be applied to the second device in the embodiments of the present application, and the computer program instruction causes a computer to perform the corresponding procedure implemented by the second device in various methods of the embodiments of the present application, which will not be repeated here for the sake of brevity.

The embodiments of the present application further provide a computer program.

Optionally, the computer program may be applied to the first device in the embodiments of the present application, the computer program when being executed on a computer, causes the computer to perform the corresponding procedure implemented by the first device in various methods of the embodiments of the present application, which will not be repeated here for the sake of brevity.

Optionally, the computer program may be applied to the second device in the embodiments of the present application, the computer program when being executed on a computer, causes the computer to perform the corresponding procedure implemented by the second device in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer-readable storage medium. Based on this understanding, the technical solutions of the present application essentially, or a part of the technical solutions that contributes to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be determined based on the protection scope of the claims.

## Claims

1. A wireless communication method, comprising:
transmitting, by a first device, a first target signal and a second target signal, wherein the first target signal is used to carry information to be transmitted, the second target signal is a signal received based on an envelope detection scheme or an amplitude-modulated signal, and a time-frequency resource of the first target signal overlaps with a time-frequency resource of the second target signal.

2. The method according to claim 1, wherein the second target signal comprises a first signal and a second signal, and a level of the first signal is higher than a level of the second signal.

3. The method according to claim 2, wherein a ratio of an amplitude of the first signal to an amplitude of the second signal is greater than a first threshold, and/or a difference between the amplitude of the first signal and the amplitude of the second signal is greater than a second threshold.

4. The method according to claim 2 or 3, wherein a time domain resource of the second target signal comprises at least one of:
a time domain symbol occupied by the first signal; or
a time domain symbol occupied by the second signal.

5. The method according to any one of claims 2 to 4, wherein a frequency domain resource of the second target signal comprises at least one of:
a subcarrier occupied by the first signal; or
a subcarrier occupied by the second signal.

6. The method according to any one of claims 2 to 5, wherein a time-frequency resource of the second signal overlaps with the time-frequency resource of the first target signal.

7. The method according to claim 6, wherein a time domain symbol occupied by the second signal overlaps with a time domain symbol occupied by the first target signal.

8. The method according to any one of claims 2 to 7, wherein the first signal is obtained by mapping a first modulated symbol onto a subcarrier occupied by the first signal, on a time domain symbol occupied by the first signal; and
the second signal is obtained by mapping a second modulated symbol onto a subcarrier occupied by the second signal, on a time domain symbol occupied by the second signal, wherein the second modulated symbol is obtained by modulating first information in the information to be transmitted, and the first information comprises all or a part of the information to be transmitted.

9. The method according to claim 8, wherein the first modulated symbol is obtained based on a first modulation scheme, and the second modulated symbol is obtained based on a second modulation scheme, wherein a modulation order of the first modulation scheme is higher than or equal to a modulation order of the second modulation scheme.

10. The method according to claim 9, wherein the second modulation scheme is determined according to the modulation order of the first modulation scheme and a constellation point corresponding to the first modulation scheme.

11. The method according to any one of claims 1 to 10, wherein the method further comprises:
transmitting, by the first device, first configuration information to a second device, the first configuration information being used to configure the time-frequency resource for transmitting the first target signal, wherein the time-frequency resource for transmitting the first target signal comprises all or a part of the time-frequency resource for transmitting the second target signal, and the second device is a receiving end device of the first target signal.

12. The method according to claim 11, wherein that the time-frequency resource for transmitting the first target signal comprises all of the time-frequency resource for transmitting the second target signal, comprises:
that the time-frequency resource for transmitting the first target signal comprises a time-frequency resource for transmitting a first signal and a time-frequency resource for transmitting a second signal.

13. The method according to claim 11, wherein that the time-frequency resource for transmitting the first target signal comprises the part of the time-frequency resource for transmitting the second target signal, comprises:
that the time-frequency resource for transmitting the first target signal comprises a time-frequency resource for transmitting a second signal.

14. The method according to any one of claims 11 to 13, wherein the method further comprises:
transmitting, by the first device, first indication information to the second device, wherein the first indication information is used to indicate whether to perform rate matching on a time-frequency resource for transmitting a first signal.

15. The method according to claim 14, wherein the first indication information is carried by at least one signaling as follows:
a radio resource control (RRC) signaling, a media access control control element (MAC CE), or downlink control information (DCI).

16. The method according to any one of claims 1 to 5, wherein a frequency domain resource of the second target signal overlaps with a frequency domain resource of the first target signal.

17. The method according to claim 16, wherein a time domain resource of the second target signal does not overlap with a time domain resource of the first target signal.

18. The method according to claim 16, wherein a time domain resource of the second target signal overlaps with a time domain resource of the first target signal.

19. The method according to any one of claims 16 to 18, wherein the method further comprises:
transmitting, by the first device, second indication information to a second device, wherein the second indication information is used to indicate whether to perform rate matching on the time-frequency resource of the second target signal.

20. The method according to claim 19, wherein the second indication information is carried by at least one signaling as follows:
an RRC signaling, an MAC CE, or DCI.

21. The method according to any one of claims 1 to 20, wherein the second target signal comprises a wake up signal (WUS).

22. A wireless communication method, comprising:
receiving, by a second device, a first target signal transmitted by a first device, wherein the first target signal is used to carry information to be transmitted,
a time-frequency resource of the first target signal overlaps with a time-frequency resource of a second target signal transmitted by the first device, and the second target signal is a signal received based on an envelope detection scheme or an amplitude-modulated signal.

23. The method according to claim 22, wherein the second target signal comprises a first signal and a second signal, and a level of the first signal is higher than a level of the second signal.

24. The method according to claim 23, wherein a ratio of an amplitude of the first signal to an amplitude of the second signal is greater than a first threshold, and/or a difference between the amplitude of the first signal and the amplitude of the second signal is greater than a second threshold.

25. The method according to claim 23 or 24, wherein a time domain resource of the second target signal comprises at least one of:
a time domain symbol occupied by the first signal; or
a time domain symbol occupied by the second signal.

26. The method according to any one of claims 23 to 25, wherein a frequency domain resource of the second target signal comprises at least one of:
a subcarrier occupied by the first signal; or
a subcarrier occupied by the second signal.

27. The method according to any one of claims 23 to 26, wherein a time-frequency resource of the second signal overlaps with the time-frequency resource of the first target signal.

28. The method according to claim 27, wherein a time domain symbol occupied by the second signal overlaps with a time domain symbol occupied by the first target signal.

29. The method according to any one of claims 23 to 28, wherein the first signal is obtained by mapping a first modulated symbol onto a subcarrier occupied by the first signal, on a time domain symbol occupied by the first signal; and
the second signal is obtained by mapping a second modulated symbol onto a subcarrier occupied by the second signal, on a time domain symbol occupied by the second signal, wherein the second modulated symbol is obtained by modulating first information in the information to be transmitted, and the first information comprises all or a part of the information to be transmitted.

30. The method according to claim 29, wherein the first modulated symbol is obtained based on a first modulation scheme, and the second modulated symbol is obtained based on a second modulation scheme, wherein a modulation order of the first modulation scheme is higher than or equal to a modulation order of the second modulation scheme.

31. The method according to claim 30, wherein the second modulation scheme is determined according to the modulation order of the first modulation scheme and a constellation point corresponding to the first modulation scheme.

32. The method according to any one of claims 22 to 31, wherein the method further comprises:
receiving, by the second device, first configuration information transmitted by the first device, the first configuration information being used to configure the time-frequency resource for transmitting the first target signal, wherein the time-frequency resource for transmitting the first target signal comprises all or a part of the time-frequency resource for transmitting the second target signal, and the second device is a receiving end device of the first target signal.

33. The method according to claim 32, wherein that the time-frequency resource for transmitting the first target signal comprises all of the time-frequency resource for transmitting the second target signal, comprises:
that the time-frequency resource for transmitting the first target signal comprises a time-frequency resource for transmitting a first signal and a time-frequency resource for transmitting a second signal.

34. The method according to claim 32, wherein that the time-frequency resource for transmitting the first target signal comprises the part of the time-frequency resource for transmitting the second target signal, comprises:
that the time-frequency resource for transmitting the first target signal comprises a time-frequency resource for transmitting a second signal.

35. The method according to any one of claims 32 to 34, wherein the method further comprises:
performing, by the second device, rate matching on a time-frequency resource for transmitting a first signal.

36. The method according to any one of claims 32 to 34, wherein the method further comprises:
determining, by the second device, according to first indication information transmitted by the first device, whether to perform rate matching on a time-frequency resource for transmitting a first signal, wherein the first indication information is used to indicate whether to perform rate matching on the time-frequency resource for transmitting the first signal.

37. The method according to claim 36, wherein the first indication information is carried by at least one signaling as follows:
a radio resource control (RRC) signaling, a media access control control element (MAC CE), or downlink control information (DCI).

38. The method according to any one of claims 22 to 26, wherein a frequency domain resource of the second target signal overlaps with a frequency domain resource of the first target signal.

39. The method according to claim 38, wherein a time domain resource of the second target signal does not overlap with a time domain resource of the first target signal.

40. The method according to claim 38, wherein a time domain resource of the second target signal overlaps with a time domain resource of the first target signal.

41. The method according to any one of claims 38 to 40, wherein the method further comprises:
performing, by the second device, rate matching on the time-frequency resource of the second target signal.

42. The method according to any one of claims 38 to 40, wherein the method further comprises:
determining, by the second device, according to second indication information transmitted by the first device, whether to perform rate matching on the time-frequency resource of the second target signal, wherein the second indication information is used to indicate whether to perform rate matching on the time-frequency resource of the second target signal.

43. The method according to claim 42, wherein the second indication information is carried by at least one signaling as follows: an RRC signaling, an MAC CE, or DCI.

44. The method according to any one of claims 41 to 43, wherein performing, by the second device, rate matching on the time-frequency resource of the second target signal, comprises:
performing, by the second device, rate matching on a time-frequency resource for transmitting a first signal; or
performing, by the second device, rate matching on a time-frequency resource for transmitting a first signal and a time-frequency resource for transmitting a second signal.

45. The method according to any one of claims 22 to 44, wherein the second target signal comprises a wake up signal (WUS).

46. A communication device, comprising:
a communication unit, configured to transmit a first target signal and a second target signal, wherein the first target signal is used to carry information to be transmitted, the second target signal is a signal received based on an envelope detection scheme or an amplitude-modulated signal, and a time-frequency resource of the first target signal overlaps with a time-frequency resource of the second target signal.

47. A communication device, comprising:
a communication unit, configured to receive a first target signal transmitted by a first device, wherein the first target signal is used to carry information to be transmitted, a time-frequency resource of the first target signal overlaps with a time-frequency resource of a second target signal transmitted by the first device, and the second target signal is a signal received based on an envelope detection scheme or an amplitude-modulated signal.

48. A communication device, comprising a processor and a memory, wherein the memory is configured to store a computer program, and the processor is configured to call and run the computer program stored in the memory, to perform the method according to any one of claims 1 to 21.

49. A communication device, comprising a processor and a memory, wherein the memory is configured to store a computer program, and the processor is configured to call and run the computer program stored in the memory, to perform the method according to any one of claims 22 to 45.

50. A chip, comprising a processor, configured to call a computer program from a memory and run the computer program, to cause a device equipped with the chip to perform the method according to any one of claims 1 to 21, or the method according to any one of claims 22 to 45.

51. A computer-readable storage medium, configured to store a computer program, wherein the computer program causes a computer to perform the method according to any one of claims 1 to 21, or the method according to any one of claims 22 to 45.

52. A computer program product, comprising computer program instructions, wherein the computer program instructions cause a computer to perform the method according to any one of claims 1 to 21, or the method according to any one of claims 22 to 45.

53. A computer program, wherein the computer program causes a computer to perform the method according to any one of claims 1 to 21, or the method according to any one of claims 22 to 45.
